# EUROPÄISCHE PATENTSCHRIFT

(11) **EP 2 548 214 B1**
(45) Veröffentlichungstag und Bekanntmachung des Hinweises auf die Patenterteilung: **15.01.2014**
(21) Anmeldenummer: 11714674.6
(22) Anmeldetag: 09.03.2011
(51) Int. Cl.: H01H 83/04, H01H 83/14

(54) **FEHLERSTROMSCHUTZSCHALTER**
RESIDUAL-CURRENT CIRCUIT BREAKER
DISJONCTEUR À COURANT DE DÉFAUT

(30) Priorität: 19.03.2010 AT 4502010
(43) Veröffentlichungstag der Anmeldung: 23.01.2013
(73) Patentinhaber: Eaton Industries (Austria) GmbH, 3943 Schrems (AT)
(72) Erfinder: DOBUSCH, Gerhard, A-1180 Wien (AT)
(74) Vertreter: Leadbetter, Benedict
(86) Internationale Anmeldenummer: PCT/AT2011/000114
(87) Internationale Veröffentlichungsnummer: WO 2011/113072

(56) Entgegenhaltungen:
- WO-A1-2009/100470
- GB-A- 2 238 921
- JP-A- 11 339 629

## Beschreibung

Die Erfindung betrifft einen Fehlerstromschutzschalter gemäß dem Oberbegriff des Patentanspruches 1.
Fehlerstromschutzschalter sind zum Schutz von Lebewesen und Anlagen vor gefährlichen Fehlerströmen vorgesehen, und müssen gemäß einschlägiger internationaler, nationaler bzw. regionaler Vorschriften beim Auftreten eines Fehlerstromes, welcher zwischen dem halben Bemessungsfehlerstrom und dem Bemessungsfehlerstrom liegen, auslösen.

Fehlerstromschutzschalter müssen weiters gemäß einschlägiger internationaler, nationaler bzw. regionaler Vorschriften eine Prüfeinrichtung zur Prüfung der Funktionstauglichkeit der Fehlerstromauslösung aufweisen. Eine derartige Prüfeinrichtung umfasst in der Regel einen Prüfwiderstand und einen Prüftaster, wobei bei Betätigung des Prüftasters ein Prüfstromkreis geschlossen wird, und derart ein simulierter Fehlerstrom von einem Leiter zu einem anderen Leiter am Summenstromwandler vorbei erzeugt wird. Sofern der Fehlerstromschutzschalter ordnungsgemäß funktioniert, wird dieser ausgelöst und die Trennkontakte des Fehlerstromschutzschalters durchtrennen die Leiter eines zu schützenden Netzes.

Gemäß Vorschrift muss die durch die Betätigung der Prüfeinrichtung hervorgerufene Durchflutung im Summenstromwandler kleiner als das 2,5fache der vom Bemessungsfehlerstrom erzeugten Durchflutung sein. Bei einem Fehlerstromschutzschalter mit einem Bemessungsfehlerstrom von 30mA dürfen daher, gemäß Vorschrift, bei Bemessungsspannung bis zu 75mA fließen. Ein bei Betätigung der Prüfeinrichtung auslösender Fehlerstromschutzschalter muss daher nicht zwangsläufig auch beim Auftreten eines wesentlich geringeren tatsächlichen Fehlerstromes noch sicher auslösen.
Der Prüfstromkreis muss weiters über einem weiteren Bereich an Versorgungsspannungen zuverlässig arbeiten. So muss der Prüfstromkreis noch bei Versorgungsspannungen von 85% der Bemessungsspannung arbeiten, sowie bei den üblichen Schwankungen der Versorgungs- bzw. Netzspannung von 10%. Weiters gibt es vierpolige Fehlerstromschutzschalter, welche auch als zweipolige Fehlerstromschutzschalter verwendet werden dürften. Daraus resultiert, dass sich bei einem Prüfstromkreis, welcher derart dimensioniert ist, dass der durch diesen simulierte Fehlerstrom bei 85% der Bemessungsspannung dem Bemessungsfehlerstrom entspricht, der simulierte Fehlerstrom bei der maximal zulässigen Versorgungsspannung um 225% erhöht. Ein Fehlerstromschutzschalter, welcher aufgrund eines erfolgreichen Tests mit einem derartig hohen simulierten Fehlerstrom als funktionssicher befunden wird, stellt daher möglicherweise eine Gefährdung für Lebewesen und Anlagen dar, da daraus nicht sicher auf die Funktion des Fehlerstromschutzschalters beim Bemessungsfehlerstrom geschlossen werden kann.

GB 2 238 921 A offenbart einen Fehlerstromschutzschalter gemäß dem Oberbegriff des Anspruchs 1.

Aufgabe der Erfindung ist es daher einen Fehlerstromschutzschalter der eingangs genannten Art anzugeben, mit welchem die genannten Nachteile vermieden werden können, und bei welchem die Funktionstauglichkeit der Fehlerstromauslösung genauer überprüft werden kann, und welcher einen einfachen Aufbau aufweist.
Erfindungsgemäß wird dies durch die Merkmale des Patentanspruches 1 erreicht.

Dadurch kann die Funktionstauglichkeit der Fehlerstromauslösung eines erfindungsgemäßen Fehlerstromschutzschalters exakter als bisher überprüft werden. Dadurch kann erreicht werden, dass der beim Betätigen des Prüftasters erzeugte simulierte Fehlerstrom in Abhängigkeit der am Fehlerstromschutzschalter tatsächlich anliegenden Versorgungsspannung lediglich in einem Bereich von etwa 10 % schwankt, im Gegensatz zu Schwankungen von über 200% gemäß dem eingangs dargelegten Stand der Technik. Dadurch kann nach einem erfolgreichen Test des Fehlerstromschutzschalters darauf geschlossen werden, dass der betreffende Fehlerstromschutzschalter auch im tatsächlich auftretenden Fehlerfall funktioniert und auch tatsächlichen Auslösen wird. Dadurch können schadhafte Fehlerstromschutzschalter als solche erkannt und ausgetauscht werden. Dadurch kann die Sicherheit von Lebewesen und Anlagen erheblich erhöht werden.
Ein erfindungsgemäßer Fehlerstromschutzschalter weist weiters einen sehr einfachen Aufbau auf. Dadurch sind die vorstehend angeführten vorteilhaften Wirkungen einfach umsetzbar und verursachen nur geringe Zusatzkosten. Dadurch kann die Verbreitung der gegenständlichen Erfindung gefördert werden, wodurch die Sicherheit einer Vielzahl elektrischer Anlagen erhöht werden kann. Durch den einfachen Aufbau ist es möglich den Prüfstromkreis vollständig netzspannungsunabhängig auszuführen, wodurch dieser sehr ausfallsicher ist, und weiters in allen Ländern dieser Erde zugelassen ist.
Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein schematischer Stromlaufplan einer ersten bevorzugten Ausführungsform eines erfindungsgemäßen Fehlerstromschutzschalters, und
Fig. 2 ein schematischer Stromlaufplan einer zweiten bevorzugten Ausführungsform eines erfindungsgemäßen Fehlerstromschutzschalters.

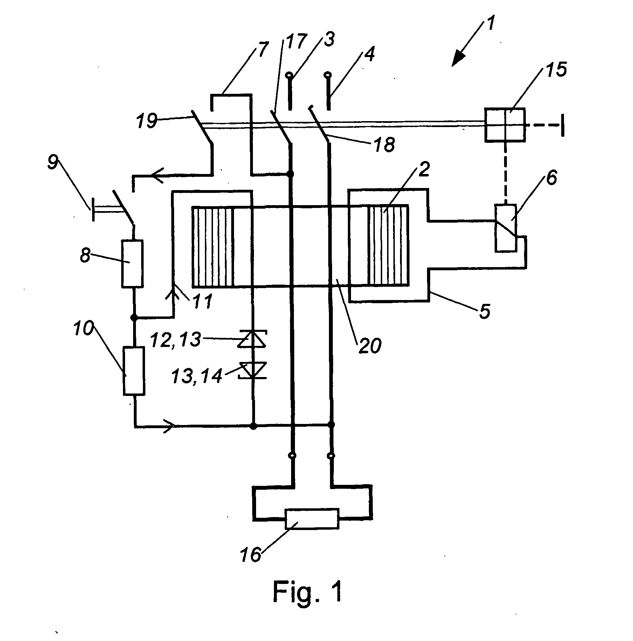

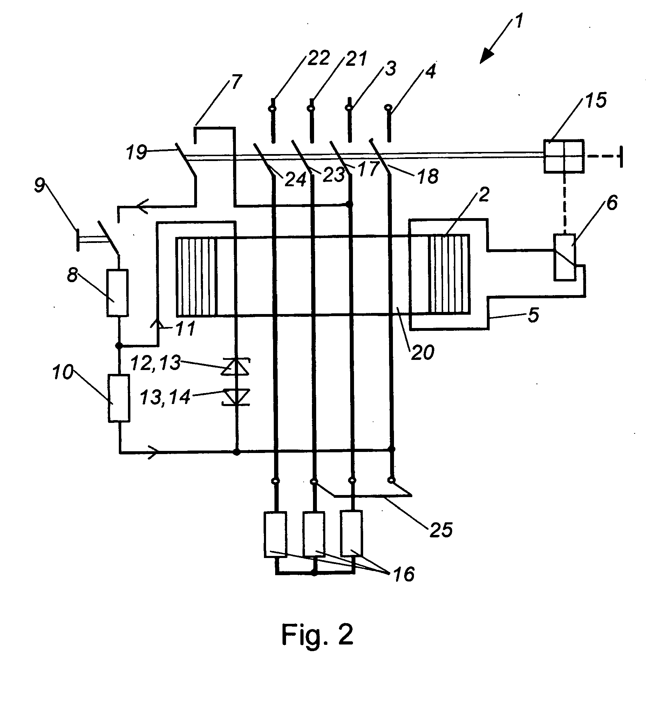

Die Fig. 1 und 2 zeigen bevorzugte Ausführungsformen eines Fehlerstromschutzschalters 1, umfassend wenigstens einen Summenstromwandler 2 durch welchen wenigstens ein erster Leiter 3 und ein zweiter Leiter 4 eines zu schützenden elektrischen Netzes geführt sind, wobei auf dem Summenstromwandler 2 wenigstens eine Sekundärwicklung 5 angeordnet ist, wobei die Sekundärwicklung 5 schaltungstechnisch mit einem Auslöser 6 verbunden ist, wobei der erste Leiter 3 mittels eines Prüfstromkreises 7 mit dem zweiten Leiter 4 verbunden ist, welcher Prüfstromkreis 7 wenigstens einen ersten Prüfwiderstand 8 sowie einen Prüftaster 9 aufweist, wobei der Prüfstromkreis 7 einen zweiten Prüfwiderstand 10 aufweist, welcher zu dem ersten Prüfwiderstand 8 schaltungstechnisch seriell angeordnet ist, wobei der zweite Prüfwiderstand 10 durch eine Nebenschlussleitung 11 überbrückt ist, wobei die Nebenschlussleitung 11 durch den Summenstromwandler 2 geführt ist, und wobei schaltungstechnisch in der Nebenschlussleitung 11 wenigstens ein erster spannungsabhängiger Widerstand 12 angeordnet ist.

Dadurch kann die Funktionstauglichkeit der Fehlerstromauslösung eines erfindungsgemäßen Fehlerstromschutzschalters 1 exakter als bisher überprüft werden. Dadurch kann erreicht werden, dass der beim Betätigen des Prüftasters 9 erzeugte simulierte Fehlerstrom in Abhängigkeit der am Fehlerstromschutzschalter 1 tatsächlich anliegenden Versorgungsspannung lediglich in einem Bereich von etwa 10 % schwankt, im Gegensatz zu Schwankungen von über 200% gemäß dem eingangs dargelegten Stand der Technik. Dadurch kann nach einem erfolgreichen Test des Fehlerstromschutzschalters 1 darauf geschlossen werden, dass der betreffende Fehlerstromschutzschalter 1 auch im tatsächlich auftretenden Fehlerfall funktioniert und auch tatsächlichen Auslösen wird. Dadurch können schadhafte Fehlerstromschutzschalter 1 als solche erkannt und ausgetauscht werden. Dadurch kann die Sicherheit von Lebewesen und Anlagen erheblich erhöht werden.

Ein erfindungsgemäßer Fehlerstromschutzschalter 1 weist weiters einen sehr einfachen Aufbau auf. Dadurch sind die vorstehend angeführten vorteilhaften Wirkungen einfach umsetzbar und verursachen nur geringe Zusatzkosten. Dadurch kann die Verbreitung der gegenständlichen Erfindung gefördert werden, wodurch die Sicherheit einer Vielzahl elektrischer Anlagen erhöht werden kann. Durch den einfachen Aufbau ist es möglich den Prüfstromkreis 7 vollständig netzspannungsunabhängig auszuführen, wodurch dieser sehr ausfallsicher ist, und weiters in allen Ländern dieser Erde einsetzbar ist.

Bei einem erfindungsgemäßen Fehlerstromschutzschalter 1 kann es sich um jede Art eines Fehlerstromschutzschalters 1 handeln, welcher insbesondere weitere Funktionalitäten und Baugruppen aufweisen kann, als die in der gegenständlichen Erfindung beschriebenen. Wie in den Fig. 1 und 2 dargestellt sind erfindungsgemäße Fehlerstromschutzschalter 1 insbesondere zur Verwendung an einem elektrischen Netz mit zwei bzw. vier Leitern 3, 4, 21, 22 vorgesehen. Es können jedoch Ausführungsformen mit jeder vorgebbaren Anzahl an Leitungen bzw. Leitern eines elektrischen Energieversorgungsnetzes bzw. Energieverteilungsnetzes vorgesehen sein.

Ein erfindungsgemäßer Fehlerstromschutzschalter 1 weist - in an sich bekannter Weise - wenigstens einen Summenstromwandler 2 mit einem Wandlerkern, umfassend einen Magnetwerkstoff, auf, durch welchen wenigstens der erste und zweite Leiter 3, 4 als Primärwicklung geführt sind. Die Bezeichnung "durch den Summenstromwandler geführt" bezieht sich dabei, sowie der weiteren Beschreibung der Erfindung, auf die übliche Ausführung des Summenstromwandlers mit einem ringförmigen Wandlerkern, welcher eine Öffnung aufweist, durch welche die betreffenden Leiter 3, 4, 21, 22 geführt sind. Bevorzugt sind diese Leiter 3, 4, 21, 22 weiters wenigstens einmal um den Querschnitt dieses "Rings" herumgeführt bzw. gewickelt.

Auf dem Summenstromwandler 2 ist weiters eine Sekundärwicklung 5 zur Detektion eines Fehlerstromsignals angeordnet, welche bevorzugt durch einen mehrmals um den Querschnitt des "Rings" gewickelten Leiter, etwa einem dünnen Draht, gebildet ist. Die Sekundärwicklung 5 ist schaltungstechnisch wenigstens mittelbar mit einem Auslöser 6 verbunden, welcher bevorzugt als Permanentmagnetauslöser ausgebildet ist, wodurch eine besonders sichere und schnelle Ansprache des Fehlerstromschutzschalters 1 erreicht werden kann. Der Auslöser 6 wirkt mechanisch über ein Schaltschloss 15 auf die Trennkontakte, was in den Fig. 1 und 2 durch eine punktierte Linie dargestellt ist. Beim Auftreten eines gefährlichen Fehlerstromes, wird ein entsprechendes Fehlerstromsignal in der Sekundärwicklung 5 erzeugt, und der Auslöser 6 wirkt auf die Trennkontakte 17, 18, 19, 23, 24, welche geöffnet werden, und den ersten und zweiten Leiter 3, 4 bzw. gegebenenfalls den dritten und vierten Leiter 21, 22 durchtrennen. Es können auch hievon abweichende Ausgestaltungen eines Auslösers 6, etwa ein netzspannungsabhängiger Auslöser, vorgesehen sein.

Ein erfindungsgemäßer Fehlerstromschutzschalter 1 weist weiters einen Prüfstromkreis 7 auf, welcher dazu ausgebildet und vorgesehen ist, einen simulierten Fehlerstrom zu erzeugen. Der Prüfstromkreis 7 verbindet dabei den ersten Leiter 3 mit dem zweiten Leiter 4, wobei diese Verbindungsleitung nicht durch den Summenstromwandler 5, sondern "außen" an diesem vorbei geführt ist. Der Prüfstromkreis 7 ist im normalen Betrieb des Fehlerstromschutzschalters 1 nicht geschlossen, es fließt daher kein Strom in diesem Prüfstromkreis 7. Zum Schließen des Prüfstromkreises 7 weist dieser einen Prüftaster 9 auf. Weiters weist der Prüfstromkreis 7 wenigstens einen ersten Prüfwiderstand 8 auf. Als Prüfwiderstand 8 im Sinne der gegenständlichen Erfindung wird ein Widerstand bezeichnet, welcher im Wesentlichen als rein ohmscher Widerstand wirkt, bzw. wenigstens bei der Frequenz des zu schützenden Netzes als rein ohmscher Widerstand wirkt.

Der Prüfstromkreis 7 weist weiters gemäß den in den Fig. 1 und 2 dargestellten bevorzugten Ausführungsformen einen sog. fünften Trennkontakt 19 auf, welcher mechanisch mit dem Schaltschloss 15 bzw. den weiteren Trennkontakten 17, 18, 23, 24 verbunden ist, und bei einem Öffnen der ersten, zweiten, dritten bzw. vierten Trennkontakte 17, 18, 23, 24 ebenfalls geöffnet wird. Dadurch kann verhindert werden, dass bei Betätigung des Prüftasters 9 und bereits erfolgter Auslösung des Fehlerstromschutzschalters 1 weiter Strom über den Prüfstromkreis 7 und den Prüfwiderstand 8 fließt. Ein derartiger weiterhin fließender Strom würde zu erheblichen Verlustleitungen an dem Prüfwiderstand 8 führen, welche zur thermischen Zerstörung des bzw. der Prüfwiderstände 8, 10 führen könnte. Durch den fünften Trennkontakt 19 kann dies sicher verhindert werden, und der erste Prüfwiderstand 8 bzw. der zweite Prüfwiderstand 10 kann, hinsichtlich dessen zulässigen Verlustleistung klein gewählt werden.

Erfindungsgemäß ist vorgesehen, dass der Prüfstromkreis 7 einen zweiten Prüfwiderstand 10 aufweist. Dieser zweite Prüfwiderstand 10 ist bevorzugt ebenfalls als ohmscher Widerstand ausgebildet. Der zweite Prüfwiderstand 10 ist schaltungstechnisch seriell zu dem ersten Prüfwiderstand 8 in dem Prüfstromkreis 7 angeordnet. Erfindungsgemäß ist weiters vorgesehen, dass der zweite Prüfwiderstand 10 durch eine Nebenschlussleitung 11 überbrückt ist. Diese Nebenschlussleitung 11 ist durch den Summenstromwandler 2 geführt, daher durch die Öffnung eines ringförmig ausgebildeten Summenstromwandlers 2. In der Nebenschlussleitung 11 ist schaltungstechnisch wenigstens ein erster spannungsabhängiger Widerstand 12 angeordnet.

Als spannungsabhängiger Widerstand 12 ist bevorzugt jede Art eines Widerstandes vorgesehen, welcher bei einer anliegenden Spannung unterhalb einer bestimmten Grenzspannung einen hohen, insbesondere einen sehr hohen, Widerstand aufweist, und oberhalb dieser Grenzspannung einen sehr geringen Widerstand. In der Praxis kann diese Grenzspannung auch als Grenzspannungsbereich mit einem gewissen Übergangsbereich des Widerstandes ausgebildet sein. Bevorzugt ist der wenigstens eine erste spannungsabhängige Widerstand 12 als Varistor und/oder als Suppressordiode und/oder Zener-Diode 13 ausgebildet. Entsprechend der bevorzugten Ausbildungen des wenigstens einen ersten spannungsabhängigen Widerstandes 12 als Halbleiterbauelement wird die sog. Grenzspannung auch als Durchbruchsspannung bezeichnet. Die betreffenden, als bevorzugte Ausführungsformen genannten Bauelemente weisen jeweils unterschiedliche charakteristische Eigenschaften, wie etwa Strom/Spannungs-Verläufe, Durchbruchsspannungen, Spannungsabfälle und dergleichen, auf. Je nach konkretem Anwendungsfall kann daher einem der bevorzugten Bauelemente der Vorrang gegeben werden.

Durch den erfindungsgemäßen schaltungstechnischen Aufbau kann erreicht werden, dass bis zu einem bestimmten vorgebbaren Spannungsabfall am zweiten Prüfwiderstand 10, daher bis zum Erreichen der Durchbruchsspannung, die Nebenschlussleitung hochohmig bzw. im Wesentlichen nicht leitend ist. In diesem Fall arbeitet der Prüfstromkreis 7 wie an sich bekannt, wobei der erste und zweite Prüfwiderstand 8, 10 wie ein Einzelwiderstand wirken. Sobald der Spannungsabfall am zweiten Prüfwiderstand 10 die Durchbruchsspannung des ersten spannungsabhängigen Widerstands 12 erreicht bzw. überschreitet, wird dieser erste spannungsabhängige Widerstand 12 niederohmig und bildet eine Parallelschaltung zum zweiten Prüfwiderstand 10. Dadurch, dass die Nebenschlussleitung 11 durch den Summenstromwandler 5 geführt ist, wird ein Teil des simulierten Fehlerstromes, welcher durch den ersten Prüfwiderstand 8 fließt, wieder durch den Summenstromwandler 2 geführt, weshalb dieser Teilstrom nicht als Fehlerstrom detektiert wird. Dadurch kann erreicht werden, dass der tatsächlich durch die Sekundärwicklung 5 detektierte Fehlerstrom - bei steigender Spannungsdifferenz zwischen dem ersten und dem zweiten Leiter 3, 4 nicht weiter ansteigt, sondern auf einem relativ konstanten Wert bzw. Bereich beschränkt bleibt. Aufgrund des Restwiderstandes, welcher der spannungsabhängige Widerstand 12, 14 in dessen durchgeschalteten Zustand weiterhin aufweist, bzw. des Spannungsabfalls an der Halbleiterübergangsschicht, fließt auch weiterhin ein Teil des simulierten Fehlerstromes durch den zweiten Prüfwiderstand 10 und an dem Summenstromwandler 2 vorbei.

Über die Größe des ersten und des zweiten Prüfwiderstandes 8, 10, sowie gegebenenfalls die Wahl wenigstens des ersten spannungsabhängigen Widerstandes 12, kann die Größe bzw. Höhe des simulierten Fehlerstromanteils vorgegeben werden, welcher über den zweiten Prüfwiderstand 10 fließt, und tatsächlich als Fehlerstrom zur Detektion durch die Sekundärwicklung 5 bereitsteht. Gemäß einer ersten bevorzugten Ausbildung des ersten und des zweiten Prüfwiderstandes 8, 10 ist etwa vorgesehen, dass der erste Prüfwiderstand 8 einen Wert von 15k Ohm aufweist, und der zweite Prüfwiderstand 10 einen Wert von 560 Ohm. Gemäß einer zweiten bevorzugten Ausbildung des ersten und des zweiten Prüfwiderstandes 8, 10 ist etwa vorgesehen, dass der erste Prüfwiderstand 8 einen Wert von 4k7 Ohm aufweist, und der zweite Prüfwiderstand 10 einen Wert von 1k5 Ohm.

In Weiterbindung der gegenständlichen Erfindung kann weiters vorgesehen sein, dass in der Nebenschlussleitung 11 schaltungstechnisch seriell zu dem wenigstens einen ersten spannungsabhängigen Widerstand 12 ein Zusatzwiderstand angeordnet ist. Dieser Zusatzwiderstand ist vorzugsweise als herkömmlicher ohmscher Widerstand ausgebildet. Dadurch kann der Spannungsabfall über die gesamte Nebenschlussleitung 11 erhöht werden, und dadurch der über den zweiten Prüfwiderstand 10 fließende simulierte Fehlerstrom weiter vorgebbar beeinflusst bzw. eingestellt werden.

Gemäß den in den Fig. 1 und 2 dargestellten, besonders bevorzugten ersten und zweiten Ausführungsform der gegenständlichen Erfindung ist vorgesehen, dass ein zweiter spannungsabhängiger Widerstand 14 seriell zu dem ersten spannungsabhängigen Widerstand 12 in der Nebenschlussleitung 11 angeordnet ist. Durch einen derartigen zweiten spannungsabhängigen Widerstand 14 kann etwa der Spannungsabfall über die Nebenschlussleitung 11 weiter beeinflusst werden.

Weiters besteht durch einen zweiten spannungsabhängigen Widerstand 14 die Möglichkeit bei unipolaren Bauelementen, wie etwa bei Ausbildung des ersten spannungsabhängigen Widerstands 12 als Zener-Diode, die Möglichkeit den betreffenden Fehlerstromschutzschalter 1 wechselspannungstauglich zu gestalten. In diesem Zusammenhang ist daher weiters vorgesehen, dass der zweite spannungsabhängige Widerstand 14 als Zener-Diode 13 ausgebildet ist. Dabei ist es besonders vorteilhaft, wenn der als Zener-Diode 13 ausgebildete erste spannungsabhängige Widerstand 12 in einer, zum zweiten spannungsabhängigen Widerstand 14 entgegengesetzten Polarität schaltungstechnisch in der Nebenschlussleitung 11 angeordnet ist.

Nachfolgend werden die erste und zweite bevorzugte Ausführungsform der gegenständlichen Erfindung anhand der Fig. 1 und 2 im Detail beschrieben.

Figur 1 zeigt eine lediglich besonders bevorzugte erste Ausführungsform eines erfindungsgemäßen Fehlerstromschutzschalters 1 zur netzspannungsunabhängigen Fehlerstromauslösung als schematische Darstellung der funktionellen Baugruppen. Ein derartiger Fehlerstromschutzschalter 1 ist zum Schutz von Anlagen und Menschen vorgesehen, wobei im Falle eines auftretenden gefährlichen Fehlerstromes die an den Fehlerstromschutzschalter 1 angeschlossenen Verbraucher bzw. Last 16 von einem Versorgungsnetz, umfassend den ersten Leiter 3 und den zweiten Leiter 4, getrennt werden. Der Fehlerstromschutzschalter weist Anschlussklemmen, insbesondere Schraubanschlussklemmen, zum Anschluss wenigstens eines ersten und eines zweiten Leiters 3, 4 eines elektrischen Versorgungsnetzes auf. Der dargestellte schematische Stromlaufplan gemäß Fig. 1 zeigt eine Ausführungsform mit lediglich einem ersten und einem zweiten Leiter 3, 4. In dem ersten und dem zweiten Leiter 3, 4 sind erste und zweite Trennkontakte 17, 18, daher Schaltkontakte, welche zum Auftrennen bzw. Unterbrechen des ersten bzw. zweiten Leiters 3, 4, sowie zum anschließenden Schließen, vorgesehen bzw. ausgebildet sind, angeordnet. Die beschriebenen und in Fig. 1 dargestellten Bauelemente bzw. Baugruppen sind zusammen in einem Isolierstoffgehäuse angeordnet, welches Durchbrechungen wenigstens für die Anschlussklemmen und einen manuell betätigbaren Handschalthebel zum manuellen Öffnen bzw. Schließen der ersten und zweiten Trennkontakte 17, 18 aufweist. Weiters kann vorgesehen sein, dass ein erfindungsgemäßer Fehlerstromschutzschalter 1 weitere - nicht dargestellte bzw. beschriebene - Baugruppen bzw. Bauteile umfasst, etwa eine Schaltstellungsanzeige, eine Auslöseanzeige und dergleichen. Fig. 1 zeigt weiters eine beispielhaft dargestellte Last 16, im Sinne eines elektrischen Verbrauchers.

Erfindungsgemäße Fehlerstromschutzschalter 1 sind bevorzugt als netzspannungsunabhängige Fehlerstromschutzschalter 1 ausgebildet. Die in einem derartigen netzspannungsunabhängigen Fehlerstromschutzschalter 1 zur Detektion eines Fehlerstromes und Auslösung des Fehlerstromschutzschalters 1, daher Trennen der Trennkontakte 17, 18 angeordneten Baugruppen beziehen deren zum Auslösen notwendige Energie vollständig aus dem Fehlerstrom bzw. dem zu diesem proportionalen Fehlerstromsignal in der Sekundärwicklung 5, und weisen daher keine aktiven elektronischen Bauteile, wie etwa Transistoren und/oder Operationsverstärker, und keine Netzteile zur Versorgung derartiger aktiver Bauelemente auf.

Der Prüfstromkreis 7 ist mit dem ersten Leiter 3 verbunden und verläuft bis zum bereits besprochenen fünften Trennkontakt 19, welcher leitend mit dem Prüftaster 9 verbunden ist. Der Prüftaster 9 ist weiters leitend mit dem ersten Prüfwiderstand 8 verbunden, dessen anderer Anschluss sowohl mit dem zweiten Prüfwiderstand 10 sowie der Nebenschlussleitung 11 leitend verbunden ist. Der weitere Anschluss des zweiten Prüfwiderstandes 10 ist leitend sowohl mit dem zweiten Leiter 4, als auch mit der Nebenschlussleitung 11 verbunden. In der Nebenschlussleitung 11 sind ein erster und ein zweiter spannungsabhängiger Widerstand 12, 14 angeordnet, welche beide als Zener-Diode 13 ausgebildet sind. Die betreffenden ZenerDioden 13 sind dabei gegenpolar in der Nebenschlussleitung 11 angeordnet.

Fig. 2 zeigt eine zweite bevorzugte Ausführungsform eines erfindungsgemäßen Fehlerstromschutzschalters 1, welche sich von der in Fig. 1 dargestellten ersten bevorzugten Ausführungsform durch die weiters vorhandenen dritten und vierten Leiter 21, 22 unterscheidet, welchen die dritten und vierten Trennkontakte 23, 24 zugeordnet sind. Der zweite und der dritte Leiter 4, 21 sind auf der lastseitigen Seite des Summenstromwandlers 2 mittels eines Brücke 25 leitend verbunden. Der weitere Aufbau des Fehlerstromschutzschalters entspricht Fig. 1.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Fehlerstromschutzschalter (1), umfassend wenigstens einen Summenstromwandler (2) durch welchen wenigstens ein erster Leiter (3) und ein zweiter Leiter (4) eines zu schützenden elektrischen Netzes geführt sind, wobei auf dem Summenstromwandler (2) wenigstens eine Sekundärwicklung (5) angeordnet ist, wobei die Sekundärwicklung (5) schaltungstechnisch mit einem Auslöser (6) verbunden ist, wobei der erste Leiter (3) mittels eines Prüfstromkreises (7) mit dem zweiten Leiter (4) verbunden ist, welcher Prüfstromkreis (7) wenigstens einen ersten Prüfwiderstand (8) sowie einen Prüftaster (9) aufweist, wobei der Prüfstromkreis (7) einen zweiten Prüfwiderstand (10) aufweist, welcher zu dem ersten Prüfwiderstand (8) schaltungstechnisch seriell angeordnet ist, wobei der zweite Prüfwiderstand (10) durch eine Nebenschlussleitung (11) überbrückt ist, und wobei schaltungstechnisch in der Nebenschlussleitung (11) wenigstens ein erster spannungsabhängiger Widerstand (12) angeordnet ist, **dadurch gekennzeichnet, dass** die Nebenschlussleitung (11) durch den Summenstromwandler (2) geführt ist.

2. Fehlerstromschutzschalter (1) nach Anspruch 1, **dadurch gekennzeichnet, dass** der erste spannungsabhängige Widerstand (12) als Varistor ausgebildet ist.

3. Fehlerstromschutzschalter (1) nach Anspruch 1, **dadurch gekennzeichnet, dass** der erste spannungsabhängige Widerstand (12) als Suppressordiode ausgebildet ist.

4. Fehlerstromschutzschalter (1) nach Anspruch 1, **dadurch gekennzeichnet, dass** der erste spannungsabhängige Widerstand (12) als Zener-Diode (13) ausgebildet ist.

5. Fehlerstromschutzschalter (1) nach einem der Ansprüche 1 bis 4, **dadurch gekennzeichnet, dass** ein zweiter spannungsabhängiger Widerstand (14) seriell zu dem ersten spannungsabhängigen Widerstand (12) in der Nebenschlussleitung (11) angeordnet ist.

6. Fehlerstromschutzschalter (1) nach Anspruch 5, **dadurch gekennzeichnet, dass** der zweite spannungsabhängige Widerstand (14) als Zener-Diode (13) ausgebildet ist.

7. Fehlerstromschutzschalter (1) nach Anspruch 6, **dadurch gekennzeichnet, dass** der als Zener-Diode (13) ausgebildete erste spannungsabhängige Widerstand (12) in einer, zum zweiten spannungsabhängigen Widerstand (14) entgegengesetzten Polarität schaltungstechnisch in der Nebenschlussleitung (11) angeordnet ist.

8. Fehlerstromschutzschalter (1) nach einem der Ansprüche 1 bis 7, **dadurch gekennzeichnet, dass** in der Nebenschlussleitung (11) schaltungstechnisch seriell zu dem wenigstens einen ersten spannungsabhängigen Widerstand ein Zusatzwiderstand angeordnet ist.

9. Fehlerstromschutzschalter (1) nach einem der Ansprüche 1 bis 8, **dadurch gekennzeichnet, dass** der Fehlerstromschutzschalter (1) als netzspannungsunabhängiger Fehlerstromschutzschalter (1) ausgebildet ist.

## Claims

1. A residual-current circuit breaker (1) comprising at least one core-balance current transformer (2) through which at least one first conductor (3) and a second conductor (4) of an electrical supply system which is to be protected are routed, wherein at least one secondary winding (5) is arranged on the core-balance current transformer (2), wherein the secondary winding (5) is connected to a release (6) by circuitry, wherein the first conductor (3) is connected to the second connector (4) by means of a test circuit (7), which test circuit (7) has at least a first test resistor (8) and a test button (9), (1) **characterized in that**, the test circuit (7) has a second test resistor (10) which is arranged in series with the first test resistor (8) by circuitry, wherein the second test resistor (10) is bridged by a bypass line (11) (2), **in that** the bypass line (11) is routed through the core-balance current transformer (2), and wherein at least one first voltage dependent resistor (12) is arranged in the bypass line (11) by circuitry (1) (2).

2. A residual-current circuit breaker (1) according to Application 1 **characterized in that** the first voltage dependent resistor (12) is formed as a varistor.

3. A residual-current circuit breaker (1) according to Application 1 **characterized in that** the first voltage dependent resistor (12) is formed as a suppressor diode.

4. A residual-current circuit breaker (1) according to Application 1 **characterized in that** the first voltage dependent resistor (12) is formed as a zener diode (13).

5. A residual-current circuit breaker (1) according to Applications 1 to 4 **characterized in that** a second voltage dependent resistor (14) is serially located next to the first voltage dependent resistor (12) in the bypass line (11).

6. A residual-current circuit breaker (1) according to Application 5 **characterized in that** the second voltage dependent resistor (14) is formed of a zener diode (13).

7. A residual-current circuit breaker (1) according to Application 6 **characterized in that** the first voltage dependent resistor (12) formed of a zener diode (13) is located next to the second voltage dependent resistor (14) in the bypass line (11) with opposite polarity.

8. A residual-current circuit breaker (1) according to Applications 1 to 7 **characterized in that** at least one first voltage dependent resistor is serially and technically located next to the bypass line (11) to provide additional resistance.

9. A residual-current circuit breaker (1) according to Applications 1 to 8 **characterized in that** the residual-current circuit breaker (1) is formed of a line voltage independent residual-current circuit breaker (1).

## Revendications

1. Disjoncteur à courant de défaut (1) comprenant au moins un dispositif de protection à courant différentiel résiduel (2) par lequel passent au moins un premier conducteur (3) et un deuxième conducteur (4) d'un système d'alimentation électrique à protéger, au moins un enroulement secondaire (5) étant monté sur le dispositif de protection à courant différentiel résiduel (2), l'enroulement secondaire (5) étant relié à un déclencheur (6) du point de vue de la technique des circuits, le premier conducteur (3) étant relié au deuxième conducteur (4) au moyen d'un circuit de contrôle (7), lequel circuit de contrôle (7) présente au moins une première résistance de contrôle (8) ainsi qu'un bouton-poussoir de test (9), (1) **caractérisé en ce que** le circuit de contrôle (7) présentant une deuxième résistance de contrôle (10), lequel étant monté en série sur la première résistance de contrôle (8) du point de vue de la technique des circuits, la deuxième résistance de contrôle (10) étant pontée par un conducteur de dérivation (11) (2), le conducteur de dérivation (11) est acheminé par le dispositif de protection à courant différentiel résiduel (2) et au moins une première résistance dépendant de la tension (12) étant montée dans le conducteur de dérivation (11) du point de vue de la technique des circuits, (1) (2).

2. Disjoncteur à courant de défaut (1) selon la revendication 1, **caractérisé en ce que** la première résistance dépendant de la tension (12) correspond à une varistance.

3. Disjoncteur à courant de défaut (1) selon la revendication 1, **caractérisé en ce que** la première résistance dépendant de la tension (12) correspond à une diode de suppression.

4. Disjoncteur à courant de défaut (1) selon la revendication 1, **caractérisé en ce que** la première résistance dépendant de la tension (12) correspond à une diode Zener (13).

5. Disjoncteur à courant de défaut (1) selon l'une quelconque des revendications 1 à 4, **caractérisé en ce que** une deuxième résistance dépendant de la tension (14) est montée en série par rapport à la première résistance dépendant de la tension (12) dans le conducteur de dérivation (11).

6. Disjoncteur à courant de défaut (1) selon la revendication 5, **caractérisé en ce que** la deuxième résistance dépendant de la tension (14) correspond à une diode Zener (13).

7. Disjoncteur à courant de défaut (1) selon la revendication 6, **caractérisé en ce que** la première résistance dépendant de la tension (12) correspondant à une diode Zener (13) est située dans un conducteur de dérivation (11) dont la polarité est opposée à la deuxième résistance dépendant de la tension (14) du point de vue de la technique des circuits.

8. Disjoncteur à courant de défaut (1) selon l'une quelconque des revendications 1 à 7, **caractérisé en ce qu'**une résistance additionnelle est montée en série par rapport à au moins une première résistance dépendant de la tension dans la conduite de dérivation (11) du point de vue de la technique des circuits.

9. Disjoncteur à courant de défaut (1) selon l'une quelconque des revendications 1 à 8, **caractérisé en ce que** celui-ci (1) correspond à un disjoncteur à courant de défaut (1) indépendant de la tension du secteur.
